# EUROPEAN PATENT APPLICATION

(11) **EP 4 600 752 A2**
(43) Date of publication of application: **13.08.2025**
(21) Application number: 25152669.5
(22) Date of filing: 17.01.2025
(51) Int. Cl.: G03G 15/00

(54) **IMAGE FORMING APPARATUS**

(30) Priority: 01.02.2024 JP 2024014347
(71) Applicant: Toshiba TEC Kabushiki Kaisha, Tokyo 141-8562 (JP)
(72) Inventor: Masaaki, Sei, Tokyo, 141-8562 (JP)
(74) Representative: Bandpay & Greuter

(57) **Abstract**

According to an embodiment, an image forming apparatus that does not require waiting for use due to maintenance control. The image forming apparatus according to an embodiment includes: an image data acquisition device configured to acquire image data; a printer configured to print an image of the image data on a sheet; an input device configured to receive setting information; and a controller. The controller is configured to receive a re-activation time setting and a re-activation control setting, store the re-activation time setting and the re-activation control setting, re-activate the image forming apparatus from an inactive state according to the re-activation time setting, and execute a maintenance control according to the re-activation control setting.

## Description

### TECHNICAL FIELD

Embodiments described herein relate generally to an image forming apparatus.

### BACKGROUND

An image forming apparatus periodically executes maintenance control such as image quality maintenance control and position alignment control. The maintenance control is executed the next time the image forming apparatus is used after it is left unused for a certain period of time or after a certain number of sheets are printed.

For example, when a user uses an image forming apparatus first thing in the morning after the image forming apparatus is left unused for a certain period of time, there is a problem in that the user generally needs to wait to use the image forming apparatus until the maintenance control is completed after the maintenance control is started.

### DISCLOSURE OF INVENTION

To this end, there is provided an image forming apparatus comprising: an image data acquisition device configured to acquire image data; a printer configured to print an image of the image data on a sheet; an input device configured to receive setting information; and a controller configured to: receive a re-activation time setting and a re-activation control setting, store the re-activation time setting and the re-activation control setting, re-activate the image forming apparatus from an inactive state according to the re-activation time setting, and execute a maintenance control according to the re-activation control setting.

In some embodiments, the re-activation control setting includes the maintenance control and setting information on whether to execute the maintenance control.

In some embodiments, the controller is configured to: set a control flag for a control setting that executes the maintenance control during the re-activation, and execute the maintenance control when the control flag is set during the re-activation, and clear the control flag after the maintenance control is executed.

In some embodiments, the controller is configured to: detect an error during re-activation, the error preventing the maintenance control from being executed is detected while the control flag is set, clear the control flag, and re-activate the image forming apparatus upon clearing the control flag.

In some embodiments, the maintenance control includes at least one of (a) image maintenance control or (b) position alignment control.

In some embodiments, the controller is configured to determine whether a re-activation condition is satisfied based on the re-activation time setting and the re-activation control setting, the re-activation condition being whether a current time matches the re-activation time setting and/or that a job is not being executed by the image forming apparatus.

In some embodiments, the controller is configured to determine whether a re-activation condition is satisfied based on the re-activation time setting and the re-activation control setting while the image forming apparatus waits for an input to execute a job.

In some embodiments, the controller is configured to determine whether a re-activation condition is satisfied based on the re-activation time setting and the re-activation control setting while the image forming apparatus executes a job.

There is also provided a method of operating a controller for an image forming apparatus comprising: receiving a re-activation time setting and a re-activation control setting, storing the re-activation time setting and the re-activation control setting, re-activating the image forming apparatus from an inactive state according to the re-activation time setting, and executing a maintenance control according to the re-activation control setting.

In some embodiments, the re-activation control setting includes the maintenance control and setting information on whether to execute the maintenance control.

In some embodiments, the method further comprises: setting a control flag for a control setting that executes the maintenance control during the re-activation, and executing the maintenance control when the control flag is set during the re-activation, and clearing the control flag after the maintenance control is executed.

In some embodiments, the method further comprises: detecting an error during re-activation, the error preventing the maintenance control from being executed is detected while the control flag is set, clearing the control flag, and re-activating the image forming apparatus upon clearing the control flag.

In some embodiments, the maintenance control includes at least one of (a) image maintenance control or (b) position alignment control.

In some embodiments, the method further comprises: determining whether a re-activation condition is satisfied based on the re-activation time setting and the re-activation control setting while the image forming apparatus waits for an input to execute a job.

In some embodiments, the method further comprises: determining whether a re-activation condition is satisfied based on the re-activation time setting and the re-activation control setting while the image forming apparatus executes a job.

### DESCRIPTION OF THE DRAWINGS

FIG. 1 is a diagram schematically showing a configuration example of an image forming apparatus according to an embodiment.
FIG. 2 is a flowchart showing a processing flow in an operation example of the image forming apparatus.

### DETAILED DESCRIPTION

In general, according to an embodiment, an image forming apparatus that does not cause a user to wait due to maintenance control is provided.

The image forming apparatus according to an embodiment includes: an image data acquisition device configured to acquire image data; a printer configured to print an image of the image data on a sheet; an input device configured to receive setting information; and a controller. The controller is configured to receive a re-activation time setting and a re-activation control setting, store the re-activation time setting and the re-activation control setting, re-activate the image forming apparatus from an inactive state according to the re-activation time setting, and execute a maintenance control according to the re-activation control setting.

### Image Forming Apparatus

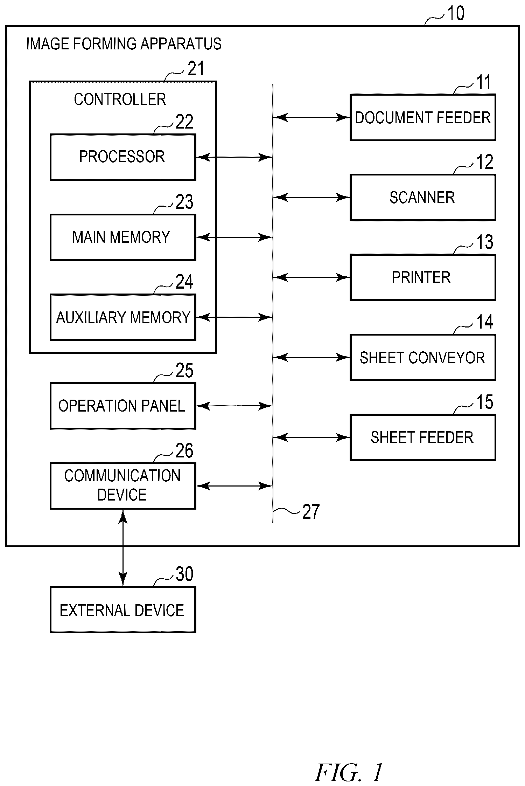

First, an image forming apparatus 10 according to an embodiment will be described with reference to FIG. 1. FIG. 1 is a diagram schematically showing an example of a configuration of the image forming apparatus 10 according to an embodiment. FIG. 1 also shows an external device 30 that communicates with (e.g., is communicatively coupled with) the image forming apparatus 10.

The image forming apparatus 10 is, for example, a multifunction peripheral (MFP). The image forming apparatus 10 has, for example, a printing function, a scanning function, a copying function, a fax function, and the like. The printing function is a function of printing an image of supplied image data onto a sheet. The scanning function is a function of reading an image of a document or the like and acquiring the image data. The copying function is, for example, a function of printing an image of image data acquired from a document or the like using the scanning function on a sheet using the printing function. The fax function is a function of transmitting image data of an image read from a document or the like using the scanning function and printing an image of the received image data on a sheet using the printing function.

The image forming apparatus 10 includes a document feeder 11, a scanner 12, a printer 13, a sheet conveyor 14, a sheet feeder 15, a controller 21, an operation panel 25, a communication device 26, and a system bus 27.

The document feeder 11 is, for example, an auto document feeder (ADF). The document feeder 11 feeds a document placed on a document tray to the scanner 12.

The scanner 12 reads an image from a document or the like and acquires the image data associated with the image on on/from the document. The scanner 12 is a kind of image data acquisition device that acquires the image data. For example, the scanner 12 may include a document glass and a reading module. The reading module reads an image from a document, a book, and the like placed on the document glass, or from a document fed to the document glass by the document feeder 11 and acquires the image data. The reading module irradiates/illuminates a document to be read with illumination light and receives reflected light by an image sensor to convert the reflected light into a digital signal. Accordingly, the reading module reads an image from the document and acquires the image data. Another reading module may be provided in the document feeder 11 to read an image from a back side of the document.

The sheet feeder 15 supplies a sheet to the sheet conveyor 14. For example, the sheet feeder 15 includes one or more sheet feeding cassettes that store sheets on which images are to be printed. The sheet feeder 15 includes a manual feed tray for manually feeding a sheet. The sheet feeder 15 selectively picks up a sheet from either the sheet feeding cassette or the manual feed tray by a sheet feeding roller and supplies the sheet to the sheet conveyor 14.

The sheet conveyor 14 conveys the sheet supplied from the sheet feeder 15 through the printer 13. The sheet conveyor 14 includes, for example, a duplex unit that enables the printer 13 to perform printing on both sides of the sheet. The duplex unit inverts the sheet by switching back the sheet and conveys the sheet through the printer 13. The sheet conveyor 14 also has a sheet output tray that receives a sheet on which an image is printed by the printer 13.

The printer 13 prints an image on the sheet conveyed by the sheet conveyor 14 based on image data to be supplied. The image data supplied for printing is, for example, image data read from a document by the scanner 12. Alternatively, the image data is image data supplied to the image forming apparatus 10 from the external device 30 separate from the image forming apparatus 10. The image data is image data received by the fax function.

For example, the printer 13 prints an image on the sheet by forming a toner image on a transfer belt and transferring the toner image onto the sheet. Alternatively, the printer 13 prints the image on the sheet by ejecting ink droplets onto the sheet using an inkjet head. In addition, the printer 13 is not limited thereto, and may print the image on the sheet by another method.

The operation panel 25 is a man-machine interface (e.g., a user interface, a user input device, etc.) for inputting and outputting information between the image forming apparatus 10 and an operator of the image forming apparatus 10. The operation panel 25 includes, for example, a touch panel and an input device. The operation panel 25 is an input device that receives setting information. The operation panel 25 is also an output device that presents information.

The touch panel may be formed by stacking a display such as a liquid crystal display or an organic EL display and a pointing device based on touch input. The touch panel displays a screen for notifying the operator of the image forming apparatus 10 of various kinds of information. The touch panel receives a touch operations (e.g., inputs) performed by the operator. That is, the touch panel is an input and output device.

The input device receives an operation performed by the operator of the image forming apparatus 10. The input device includes a keyboard, a keypad, a touchpad, and the like.

The communication device 26 includes a communication interface, for example, a network interface card, and communicates with the external device 30. The communication device 26 communicates with the external device 30 via a wired or wireless network, for example, a local area network (LAN). For example, the communication device 26 receives the image data to be printed from the external device 30. The communication device 26 may transmit the image data read by the scanner 12 to the external device 30. The communication device 26 is a kind of image data acquisition device that acquires the image data.

The system bus 27 is a communication path between the document feeder 11, the scanner 12, the printer 13, the sheet conveyor 14, the sheet feeder 15, the controller 21, the operation panel 25, and the communication device 26. The document feeder 11, the scanner 12, the printer 13, the sheet conveyor 14, the sheet feeder 15, the controller 21, the operation panel 25, and the communication device 26 can transmit and receive information, data, a control signal, a command, a response, and the like via the system bus 27.

The controller 21 has a function of executing various jobs of the image forming apparatus 10 according to an instruction input via the operation panel 25 or the communication device 26 from the external device 30. The various jobs include execution of various functions, that is, execution of the printing function, the scanning function, the copying function, the fax function, and the like.

The controller 21 controls the document feeder 11, the scanner 12, the printer 13, the sheet conveyor 14, the sheet feeder 15, the operation panel 25, and the communication device 26 in order to execute various functions of the image forming apparatus 10. The controller 21 includes a processor 22, a main memory 23, and an auxiliary memory 24.

The processor 22 is a calculation element that executes calculation processing. The processor 22 controls each unit to execute various functions of the image forming apparatus 10 according to an operating system or application software stored in the main memory 23 or the auxiliary memory 24. The processor 22 includes, for example, a central processing unit (CPU) or a graphic processing unit (GPU).

The main memory 23 includes, for example, a read only memory (ROM) and a random access memory (RAM).

The ROM is a non-volatile memory. The ROM mainly non-temporarily stores an operating system executed by the processor 22. The ROM may store data necessary for execution of the operating system.

The RAM is a volatile memory. The RAM mainly temporarily stores an operating system and application software to be executed by the processor 22, and data necessary for executing the operating system and the application software.

The auxiliary memory 24 is a non-volatile memory such as a hard disk drive (HDD) or a solid-state drive (SSD). The auxiliary memory 24 mainly non-temporarily stores (e.g., permanently stores) application software to be executed by the processor 22 and data required for executing the application software.

The processor 22 reads the application software stored in the auxiliary memory 24 and the data necessary for executing the application software into the RAM of the main memory 23 and executes the application software to execute various functions of the image forming apparatus 10.

### Operation Example

Next, an operation example of the image forming apparatus 10 according to the embodiment will be described. Requirements of the image forming apparatus 10 in the operation example will be described before describing the operation example. The image forming apparatus 10 in the operation example has the following requirements.

The controller 21 has a function of executing various jobs of the image forming apparatus 10 and also a function of re-activating the image forming apparatus 10 according to a re-activation time setting in order to refresh contents of the main memory 23 (e.g., by restarting or resuming operation of the image forming device after it has been inactive, idle, in sleep mode, standby mode, etc.). The re-activation time setting is stored in advance (e.g., preset by a user, manufacturer, and/or provider, etc.) in the auxiliary memory 24 via the operation panel 25 or via the communication device 26 from the external device 30. The re-activation time setting includes a time interval from the activation to the re-activation, a time interval from the previous re-activation to the start of the next re-activation, a start time of the re-activation, and the like. For example, the start time of the re-activation is a time at which the use of the image forming apparatus 10 is not generally expected (e.g., at a time of low traffic/use, idle times, when no tasks are scheduled, etc.).

The controller 21 also has a function of executing the maintenance control during re-activation of the image forming apparatus 10 according to a re-activation control setting. The re-activation control setting is stored in advance (e.g., preset by a user, manufacturer, and/or provider, etc.) in the auxiliary memory 24 via the operation panel 25 or via the communication device 26 from the external device 30. The re-activation control setting includes maintenance control candidates (e.g., control processes associated with components of the image printing apparatus 10) that can be executed during the re-activation and setting information as to whether to execute the maintenance control of each of the candidates.

The maintenance control includes one of image maintenance control and position alignment control. For example, the image maintenance control may control adjusting various settings for obtaining an optimum printing result. For example, the position alignment control may control adjusting a relative position between the printer 13 and the sheet conveyor 14. The maintenance control is not limited to the image maintenance control and the position alignment control, the maintenance control may include other kinds of control.

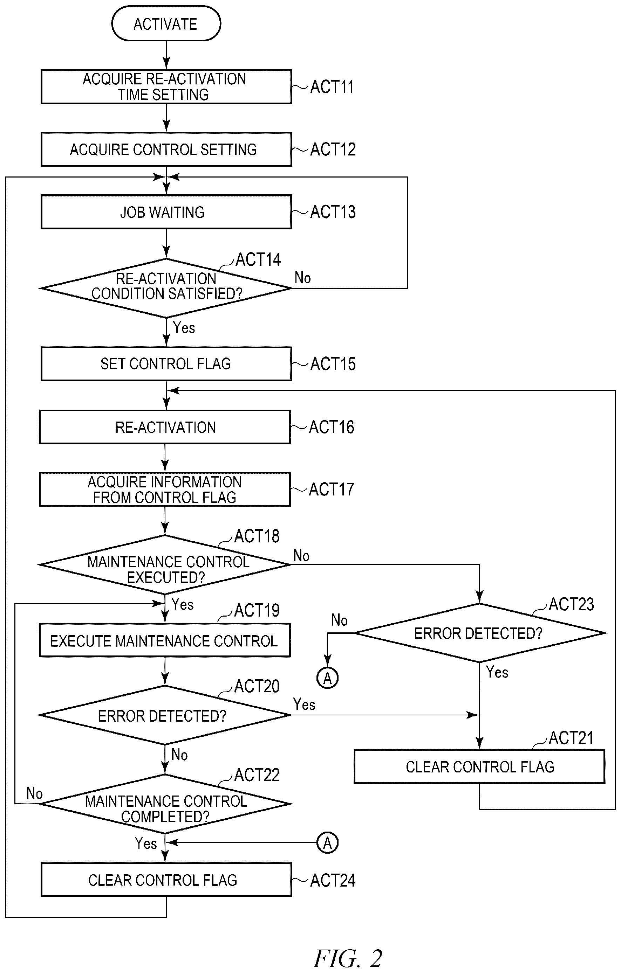

An operation example of the image forming apparatus 10 according to an embodiment will be described with reference to FIG. 2. FIG. 2 is a flowchart showing a processing flow in the operation example of the image forming apparatus 10 according to an embodiment. The operation example described below may be performed by each unit of the image forming apparatus 10 under the control of the controller 21.

After the image forming apparatus 10 is activated, in ACT 11, the controller 21 causes the processor 22 to acquire a re-activation time setting from the auxiliary memory 24 and store the re-activation time setting in the main memory 23.

Next, in ACT 12, the controller 21 causes the processor 22 to acquire a re-activation control setting from the auxiliary memory 24 and store the re-activation control setting in the main memory 23.

As described above, the re-activation control setting is setting information on the maintenance control candidates (e.g., the image maintenance control and the position alignment control) and whether to execute the maintenance control of each of the candidates. That is, simply speaking, the re-activation control setting is information on the maintenance control (e.g., the image maintenance control and the position alignment control) executed during the re-activation. The maintenance control executed during the re-activation may be one of the image maintenance control and the position alignment control or may be both. Further, the re-activation control setting may be a setting in which the maintenance control is not executed during the re-activation (e.g., a time period in which maintenance control is not activated or is prevented from being activated).

Thereafter, in ACT 13, the image forming apparatus 10 waits for a job, and the controller 21 waits for an input of an execution instruction for various jobs of the image forming apparatus 10, either via the operation panel 25 or through the communication device 26 from the external device 30.

In parallel with ACT 13 (e.g., while awaiting a job), in ACT 14, the controller 21 causes the processor 22 to refer to the re-activation time setting or the like in the main memory 23 and determine whether a re-activation condition is satisfied.

The job waiting process in ACT 13 and the re-activation determination in ACT 14 may be executed in parallel. In ACT 13, when an execution instruction of the job is input (e.g., when the controller 21 receives an input from the communication device 26 or the operation panel 25), the controller 21 causes the image forming apparatus 10 to execute the job according to the input execution instruction. The re-activation determination in ACT 14 (e.g., whether a re-activation condition is satisfied) is also executed during the execution of the job, without waiting for the completion of the job.

For example, if the job is printing, the controller 21 causes the image forming apparatus 10 to execute the printing function. If the job is copying, the controller 21 causes the image forming apparatus 10 to execute the scanning function and the printing function. If the job is to stop the image forming apparatus 10 (e.g., to stop or cancel an operation), the controller 21 stops the image forming apparatus 10.

The re-activation condition in ACT 14 is, for example, whether a current time matches the re-activation time setting. For example, a time interval from the activation to the start of the re-activation has already elapsed at the current time, or the start time of the re-activation is reached.

Another re-activation condition in ACT 14 is that the job is not being executed. In the determination processing in ACT 14, the controller 21 determines that the re-activation condition is not satisfied while the job is being executed. The controller 21 waits for the completion of the job and performs the determination again. To enter sleep mode to save power, the controller 21 determines that the job execution is not performed.

As a result of the determination that the re-activation condition is not satisfied in ACT 14, the controller 21 returns to the job waiting process of ACT 13 and continues to execute the processes of ACT 13 and ACT 14 until the re-activation condition is satisfied.

As a result of the determination that the re-activation condition is satisfied in ACT 14, the controller 21 sets a control flag for maintenance control in ACT 15.

Here, setting the control flag means the setting information indicates that the maintenance control is to be executed during the re-activation. Conversely, clearing the control flag means the setting information indicates that the maintenance control will not be executed during the re-activation.

Generally, a flag, not limited to the control flag in the example, expresses two states by writing binary information, for example, 0 or 1, in a 1-bit memory area.

For example, the control flag is set by writing 1, or the control flag is cleared by writing 0 in a one-bit memory area secured for the control flag in the main memory 23 or the auxiliary memory 24.

The controller 21 may store the control flag in the main memory 23 or in the auxiliary memory 24. However, when the control flag is stored in the main memory 23, the controller 21 may also store the information on the control flag in the auxiliary memory 24 at least before the re-activation.

For example, when the execution of the image maintenance control and the position alignment control during the re-activation are independently controlled, for example, when one control is executed while the other is not (e.g., the image maintenance control is executed and the position alignment control is not executed, the position alignment control is executed and the image maintenance control is not executed), a control flag is set for each of the image maintenance control and the position alignment control. That is, the control flag of the image maintenance control and the control flag of the position alignment control are separately set. Accordingly, this allows for a wider variation in the maintenance control.

The controller 21 executes the re-activation in ACT 16 while maintaining the control flag set in the processing in ACT 15.

In ACT 16, the controller 21 re-activates the image forming apparatus 10 according to the re-activation time setting. Upon the re-activation, the contents of the main memory 23 are refreshed.

After the re-activation, in ACT 17, the controller 21 acquires a control setting from the control flag in the auxiliary memory 24. That is, the controller 21 acquires information on whether to execute the maintenance control after the re-activation. More specifically, for example, the controller 21 acquires information on whether to execute the image maintenance control and information on whether to execute the position alignment control after the re-activation.

In ACT 18, the controller 21 determines whether to execute the maintenance control based on the control setting acquired in ACT 17. More specifically, for example, the controller 21 determines whether to execute the image maintenance control and whether to execute the position alignment control.

If the result of the determination in ACT 18 is that the maintenance control is to be executed, in ACT 19, the controller 21 performs the maintenance control. For example, when one of the image maintenance control and the position alignment control is to be executed, the controller 21 executes the image maintenance control and the position alignment control that is to be executed and does not execute the image maintenance control and the position alignment control that is not to be executed.

In parallel with the execution of the maintenance control in ACT 19, it is determined in ACT 20 whether an error that prevents the maintenance control from being executed is present (e.g., detected, recognized, etc.) while the control flag is set. For example, the determination of whether an error is detected/ recognized is performed by acquiring information from various sensors incorporated in the document feeder 11, the scanner 12, the printer 13, the sheet conveyor 14, the sheet feeder 15, and the like.

As a result of the determination in ACT 20, if an error is detected/recognized, the controller 21 clears the control flag in ACT 21 and then executes the re-activation in ACT 16.

As a result of the determination in ACT 20, if an error is not detected/recognized, the controller 21 determines whether the execution of the maintenance control is complete in ACT 22. If the controller 21 determines that the execution of the maintenance control is not complete, the processing returns to ACT 19, and the processing of ACT 19, ACT 20, and ACT 22 is continuously executed until the execution of the maintenance control is completed.

If the maintenance control in ACT 19 is executed, an error is not detected/recognized as the result of the determination in ACT 20, and the execution of the maintenance control is complete as the result of the determination in ACT 22, the controller 21 proceeds to the process in ACT 24.

As a result of the determination in ACT 18, if the maintenance control will not be executed, the controller 21 determines whether an error that prevents maintenance control from being executed is detected while the control flag is set in ACT 23.

If the controller 21 determines that an error is present in ACT 23, the controller 21 proceeds to the process in ACT 21, clears the control flag in ACT 21, and then executes the re-activation in ACT 16.

If the controller 21 determines that an error is not present in ACT 23, the controller 21 proceeds to the process in ACT 24.

In ACT 24, the controller 21 clears the control flag and then proceeds to the process of waiting for a job in ACT 13.

### Effects

The image forming apparatus 10 according to the embodiment performs the maintenance control during the re-activation. The re-activation is performed while avoiding the execution of the job or at a time when the image forming apparatus 10 is not expected to be in use (e.g., during idle periods, when no tasks are scheduled, etc.). Therefore, the user does not wait to use the image forming apparatus 10 due to the maintenance control.

While certain embodiments have been described, the embodiments have been presented by way of example, and are not intended to limit the scope of the disclosure. These novel embodiments can be implemented in various other forms, and various omissions, substitutions, and modifications can be made without departing from the scope of the disclosure. The embodiments and the modifications thereof are included in the scope of the disclosure and are included in the scope of the disclosure disclosed in the claims.

## Claims

1. An image forming apparatus (10) comprising:
an image data acquisition device (12) configured to acquire image data;
a printer (13) configured to print an image of the image data on a sheet;
an input device (25) configured to receive setting information; and
a controller (21) configured to:
receive a re-activation time setting and a re-activation control setting,
store the re-activation time setting and the re-activation control setting,
re-activate the image forming apparatus from an inactive state according to the re-activation time setting, and
execute a maintenance control according to the re-activation control setting.

2. The image forming apparatus of claim 1, wherein the re-activation control setting includes the maintenance control and setting information on whether to execute the maintenance control.

3. The image forming apparatus of claim 1 or 2, wherein the controller is configured to:
set a control flag for a control setting that executes the maintenance control during the re-activation, and
execute the maintenance control when the control flag is set during the re-activation, and
clear the control flag after the maintenance control is executed.

4. The image forming apparatus of claim 3, wherein the controller is configured to:
detect an error during re-activation, the error preventing the maintenance control from being executed is detected while the control flag is set,
clear the control flag, and
re-activate the image forming apparatus upon clearing the control flag.

5. The image forming apparatus of any one of claims 1 to 4, wherein the maintenance control includes at least one of (a) image maintenance control or (b) position alignment control.

6. The image forming apparatus of any one of claims 1 to 5, wherein the controller is configured to determine whether a re-activation condition is satisfied based on the re-activation time setting and the re-activation control setting, the re-activation condition being whether a current time matches the re-activation time setting and/or that a job is not being executed by the image forming apparatus.

7. The image forming apparatus of any one of claims 1 to 6, wherein the controller is configured to determine whether a re-activation condition is satisfied based on the re-activation time setting and the re-activation control setting while the image forming apparatus waits for an input to execute a job.

8. The image forming apparatus of any one of claims 1 to 7, wherein the controller is configured to determine whether a re-activation condition is satisfied based on the re-activation time setting and the re-activation control setting while the image forming apparatus executes a job.

9. A method of operating a controller for an image forming apparatus comprising:
receiving a re-activation time setting and a re-activation control setting,
storing the re-activation time setting and the re-activation control setting,
re-activating the image forming apparatus from an inactive state according to the re-activation time setting, and
executing a maintenance control according to the re-activation control setting.

10. The method of claim 9, wherein the re-activation control setting includes the maintenance control and setting information on whether to execute the maintenance control.

11. The method of claim 9 or 10, further comprising:
setting a control flag for a control setting that executes the maintenance control during the re-activation, and
executing the maintenance control when the control flag is set during the re-activation, and
clearing the control flag after the maintenance control is executed.

12. The method of claim 9, further comprising:
detecting an error during re-activation, the error preventing the maintenance control from being executed is detected while the control flag is set,
clearing the control flag, and
re-activating the image forming apparatus upon clearing the control flag.

13. The method of any one of claims 9 to12, wherein the maintenance control includes at least one of (a) image maintenance control or (b) position alignment control.

14. The method of any one of claims 9 to 13, further comprising:
determining whether a re-activation condition is satisfied based on the re-activation time setting and the re-activation control setting while the image forming apparatus waits for an input to execute a job.

15. The method of any one of claims 9 to 14, further comprising:
determining whether a re-activation condition is satisfied based on the re-activation time setting and the re-activation control setting while the image forming apparatus executes a job.
